Europäisches Patentamt

European Patent Office

Office européen des brevets

(19)

(11) Veröffentlichungsnummer: **0 200 940**
**B1**

(12) **EUROPÄISCHE PATENTSCHRIFT**

(45) Veröffentlichungstag der Patentschrifft:
21.03.90

(21) Anmeldenummer: 86104824.7

(22) Anmeldetag: 09.04.86

(51) Int. Cl.⁵: **A 61 C 1/00**

(54) Zahnärztliche Handstückanordnung.

(30) Priorität: 11.04.85 DE 8510667 U

(43) Veröffentlichungstag der Anmeldung:
12.11.86 Patentblatt 86/46

(45) Bekanntmachung des Hinweises auf die Patenterteilung:
21.03.90 Patentblatt 90/12

(84) Bennante Vertragsstaaten:
AT CH DE FR GB IT LI SE

(56) Entgegenhaltungen:
US-A-3 175 293
US-A-3 255 527
US-A-3 499 223
US-A-4 007 529

(73) Patentinhaber: Hüttenmoser, Hans
Huebstrasse 1
CH-9302 Kronbühl (CH)

(72) Erfinder: Dürr, Walter
Bulachweg 14
D-7250 Leonberg (Warmbronn) (DE)

(74) Vertreter: Ostertag, Reinhard
Patentanwälte Dr. Ulrich Ostertag Dr. Reinhard Ostertag
Eibenweg 10
D-7000 Stuttgart 70 (DE)

## Beschreibung

Die Erfindung betrifft eine zahnärztliche Handstückanordnung gemäß dem Oberbegriff des Anspruches 1.

Derartige Handstückanordnungen sind auf dem Markt erhältlich, wobei im Kopfstück Kanäle für die Kühlluft und das Kühlwasser ausgebildet sind, die zur werkzeugseitigen Stirnfläche des Kopfstückes führen. Diese Kanäle münden griffstückseitig an axial beabstandeten Stellen aus dem Kopfstückgehäuse aus und sind durch O-Ringe gegeneinander abgedichtet. Das Griffstückgehäuse hat fluchtende Auslaßöffnungen für Kühlluft und Kühlwasser.

Bei derartigen Handstückanordnungen sind die Kopfstücke wegen der in diesen ausgebildeten Strömungsmittelkanäle mechanisch aufwendig und teuer. Außerdem ergeben sich in der Praxis im Dauereinsatz Dichtprobleme an der Verbindungsstelle zum Griffstück.

Es sind ferner Handstückanordnungen bekannt, bei welchen eine Austrittsöffnung für Kühlluft und eine Austrittsöffnung für Kühlwasser im dem Kopfstück benachbarten Endabschnitt des Griffstückes ausgebildet sind. Bei solchen Handstückanordnungen enthält das Kopfstück keine Strömungsmittelkanäle, nachteilig ist jedoch, daß nur eine einzige Kühlluftaustrittsöffnung und eine einzige Kühlwasseraustrittsöffnung vorhanden ist. Arbeitet man nur mit einem einzigen Kühlspraystrahl, besteht jedoch die Gefahr einer unzulässig starken Erhitzung an der Arbeitsstelle, wenn dieser Spraystrahl durch ein Hindernis, z. B. das Bohrloch umgebendes Zahnmaterial abgehalten wird.

In der US-A 007 529 ist eine zahnärztliche Handstückanordnung beschrieben, welche eine zur werkzeugseitigen Stirnfläche des Kopfstückes geführte Kühlmittelleitung aufweist. Das Kopfstück hat in Richtung der in ihm verlaufenden Antriebswelle große Abmessung, über entsprechend große Länge muß die Kühlmitteilleitung freitragend vom Griffstück vorstehen. Man hat so eine Kühlmittelzufuhr zum Werkzeug nur von einer Seite, woraus sich die schon oben angesprochene Gefahr unzulässig starker Erhitzung an der Arbeitsstelle bei Abhalten des Kühlmittelstrahles durch ein Hindernis ergibt.

Durch die vorliegende Erfindung soll daher eine zahnärztliche Handstückanordnung gemäß dem Oberbegriff des Anspruches 1 geschaffen werden, bei welcher zwei geometrisch nicht äquivalente Spraystrahlen aus Kühlwasser/Kühlluft-Gemisch erhalten werden, ohne daß im Kopfstück Strömungsmittelkanäle vorgesehen werden müssen, wobei die Kühlwasser/Kühluftkanäle sowohl bei aufgesetztem Kopfstück als auch bei abgenommenem Kopfstück hohe mechanische Stabilität aufweisen sollen.

Diese Aufgabe ist erfindungsgemäß gelöst durch eine Handstückanordnung gemäß Anspruch 1.

Da bei der erfindungsgemäßen Handstückanordnung die Austrittsöffnungspaare für Kühlwasser und Kühlluft in Griffstückarmen untergebracht sind, welche die Werkzeugachse wie die Zinken einer Gabel zwischen sich aufnehmen, kann man beide Kühlspraystrahlen auch nahe bei der Werkzeugachse erzeugen, und trotzdem kann das Kopfstück mit eingespanntem Werkzeug infolge der gabelähnlichen Ausbildung des Griffstückendes weiterhin leicht in axialer Richtung abgezogen und aufgesteckt werden.

Vorteilhafte Weiterbildungen der Erfindung sind in Unteransprüchen angegeben.

Mit der Weiterbildung der Erfindung gemäß Anspruch 2 wird erreicht, daß einer der Kühlspraystrahlen beim vorderen Ende des Kopfstückes, der andere in der Nachbarschaft von dessen hinterem Ende erzeugt wird. Das Vorsehen eines kurzen und eines langen Griffstückarmes hat auch den Vorteil, daß man vor dem kürzeren Griffstückarm zusätzlich einen Lichtleiter unterbringen kann, welcher die Arbeitsstelle beleuchtet.

Die Weiterbildungen der Erfindung gemäß den Ansprüchen 3 und 4 sind im Hinblick auf geringe Bauhöhe des Kopfstückes und im Hinblick auf ein präzises Positionieren des Kopfstückes am Griffstück von Vorteil.

Mit der Weiterbildung der Erfindung gemäß Anspruch 5 erhält man eine vergrößerte Handhabungsfläche zum Abnehmen und Aufstecken des Kopfstückes bei bündig durchgehender Außenkontur der Handstückanordnung.

Mit der Weiterbildung der Erfindung gemäß Anspruch 6 wird ohne nennenswerte Vergrößerung der radialen Abmessung der Handstückanordnung eine sichere Verrastung des Kopfstückes am Griffstück erhalten.

Bekannte Handstückanordnungen haben am kopfseitigen Ende des Griffstückes mehrere Lichtaustrittsöffnungen, welche über Lichtleiter von einer Glühlampe her mit Licht versorgt werden, die in der das Griffstück tragenden Motoreinheit angeordnet ist. Bei einer Handstückanordnung gemäß Anspruch 8 können derartige lange, das gesamte Griffstück durchsetzende Lichtleiter entfallen, was sowohl im Hinblick auf die Montage des Griffstückes als auch im Hinblick auf Lichtverluste von Vorteil ist. Bei einer Handstückanordnung gemäß Anspruch 8 wird das zum Beleuchten der Arbeitsstelle benötigte Licht in unmittelbarer Nachbarschaft des Kopfstückes erzeugt. Da die Leuchtenbohrung zur Stirnseite des Griffstückes hin offen ist, kann das dort austretende Licht einfach in einen Lichtleiter eingekoppelt werden, der sich bogenförmig zu einem Punkte hinerstreckt, welcher dem Lichtaustrittsschlitz der Leuchtenbohrung bezüglich der Werkzeugachse im wesentlichen diametral gegenüberliegt. Auf diese Weise ist die Basis zwischen den beiden abgegebenen Lichtstrahlen vergrößert und damit eine Schattenbildung durch das Werkzeug erheblich kleiner als bei Verwendung zweier nur kleinen Abstand voneinander aufweisender Lichtstrahlen.

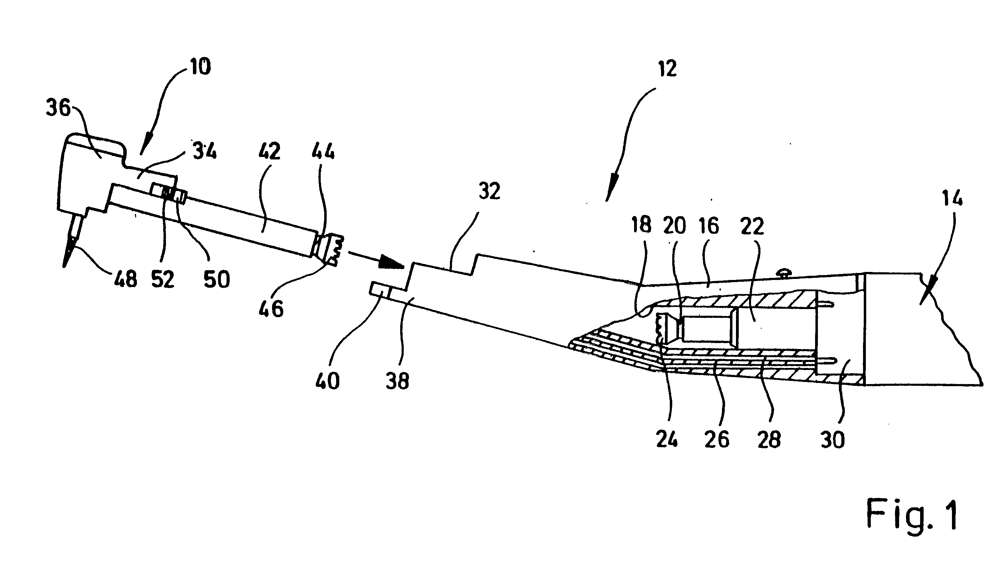

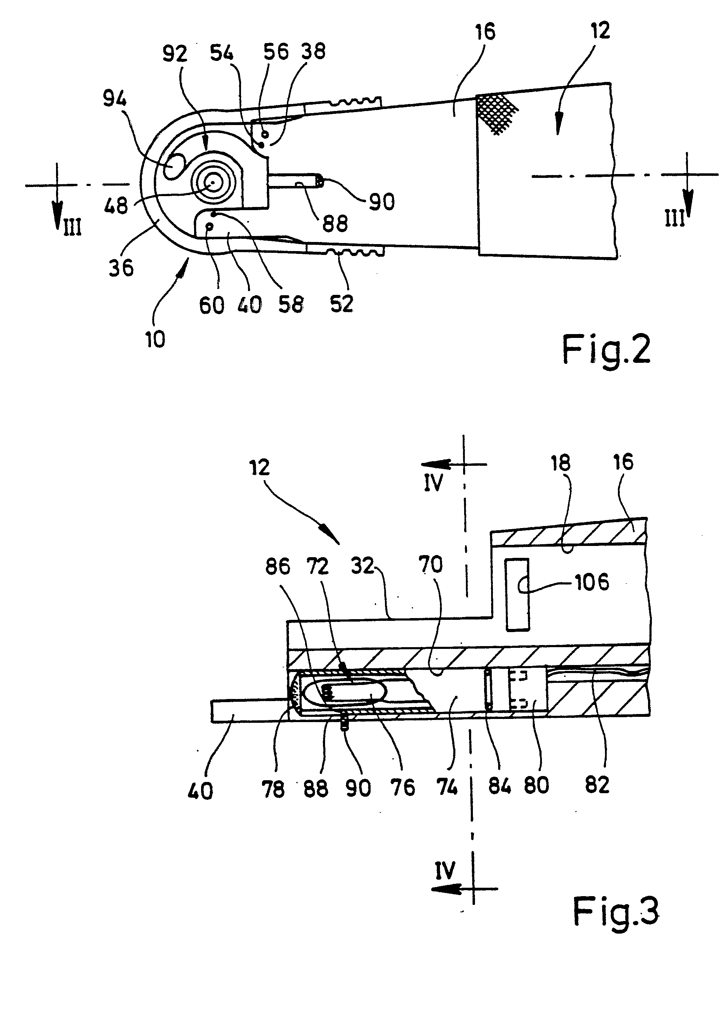

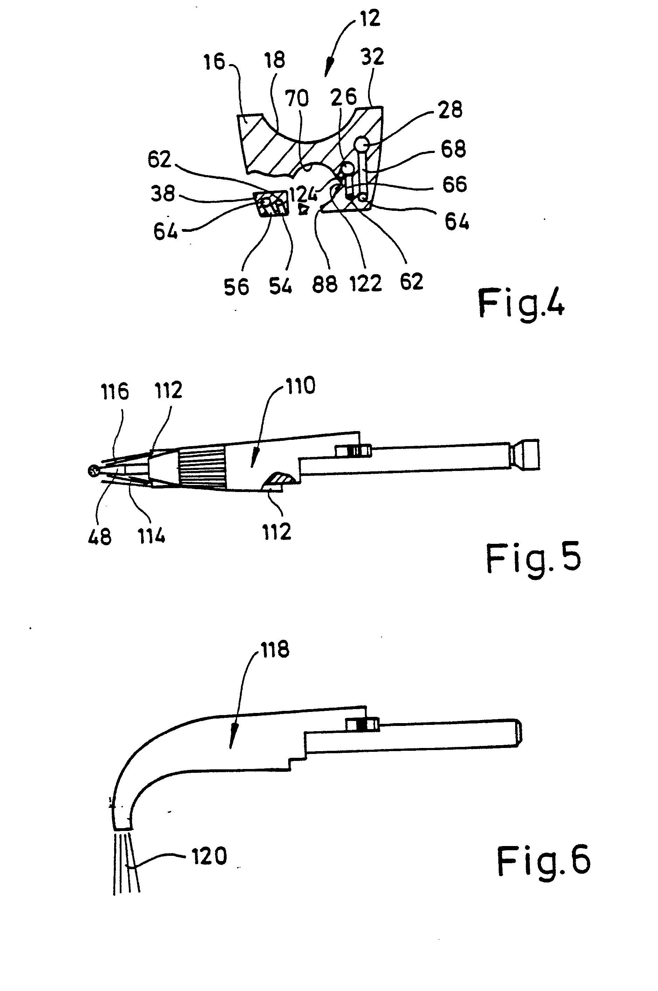

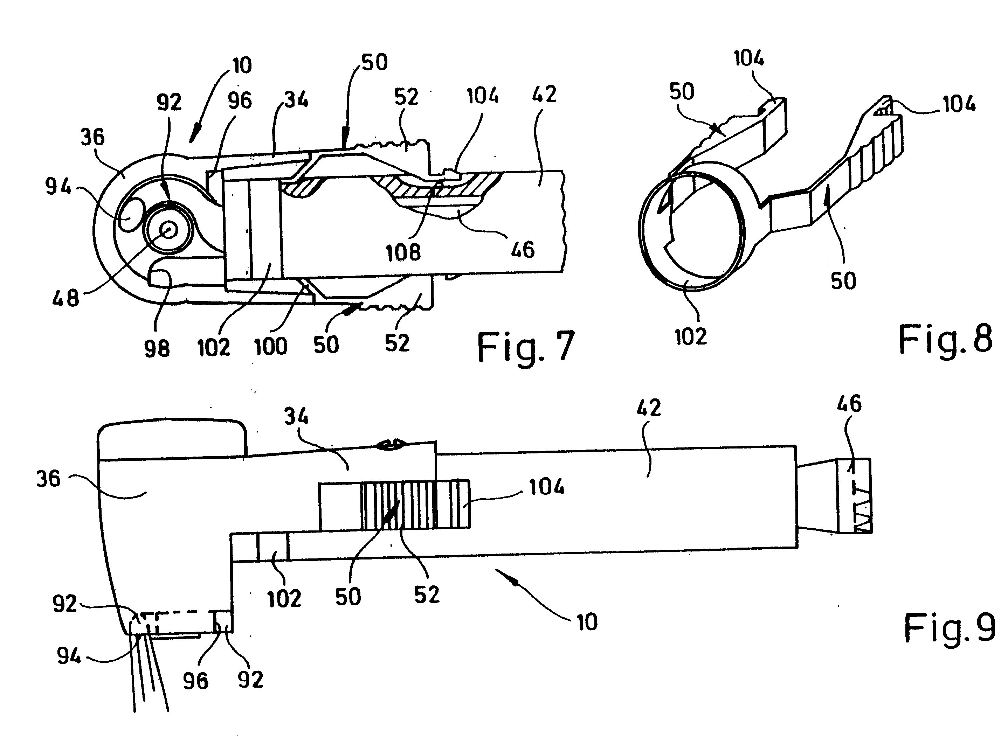

Mit der Weiterbildung der Erfindung gemäß Anspruch 9 ist unter nur sehr geringem zusät-

Fig. 1

EP 0 200 940 B1

Fig.2

Fig.3

Fig.4

Fig.5

Fig.6

Fig. 7

Fig. 8

Fig. 9